# EUROPEAN PATENT SPECIFICATION

(11) **EP 3 444 636 B1**
(45) Date of publication and mention of the grant of the patent: **09.06.2021**
(21) Application number: 17781927.3
(22) Date of filing: 13.04.2017
(51) Int. Cl.: G01S 19/41, G05D 1/02, G05B 19/418, G01S 5/00

(54) **DIFFERENTIAL GLOBAL POSITIONING SYSTEM AND A POSITIONING METHOD THEREFOR**
DIFFERENZIELLES GLOBALES POSITIONIERUNGSSYSTEM UND POSITIONIERUNGSVERFAHREN DAFÜR
SYSTÈME DE POSITIONNEMENT GLOBAL DIFFÉRENTIEL ET PROCÉDÉ DE POSITIONNEMENT ASSOCIÉ

(30) Priority: 13.04.2016 CN 201610227219
(43) Date of publication of application: 20.02.2019
(60) Divisional application: 21166901.5
(73) Proprietor: Positec Power Tools (Suzhou) Co., Ltd, Suzhou, Jiangsu 215123 (CN)
(72) Inventor: HE, Mingming, Suzhou Jiangsu 215123 (CN); TAN, Yiyun, Suzhou Jiangsu 215123 (CN)
(74) Representative: Dentons UK and Middle East LLP
(86) International application number: PCT/CN2017/080473
(87) International publication number: WO 2017/177951

(56) References cited:
- EP-A1- 1 215 508
- EP-A1- 1 903 351
- CN-A- 102 452 617
- CN-A- 103 076 591
- CN-A- 103 235 595
- US-A- 5 938 704
- US-A1- 2014 324 300

## Description

### BACKGROUND

### Technical Field

The present invention relates to the field of accurate positioning, and in particular to a differential global positioning system in a certain area, and a positioning method of the differential global positioning system.

### Related Art

With the development of technologies for global positioning systems (GPS, Beidou, and the like), in order to achieve more accurate positioning, more and more people use a differential global positioning system (DGPS) to implement accurate positioning of moving objects.

The differential global positioning system (DGPS) implements observation by using a GPS receiver disposed on a base station. Based on the known precision coordinates of the base station, the deviation correction data from the base station to the satellite is calculated, and the data is transmitted by the base station in real time. A user receiver also receives the correction data sent by the base station while performing GPS observation, and corrects a positioning result to improve the positioning accuracy.

There are currently two manners to apply the differential global positioning system (DGPS) on a machine. One is to use a self-built base station, which transmits differential correction data to correct measurement errors for high-accuracy positioning. However, in this way, for an individual user, a machine needs an independent base station, so the cost is too high, and each base station requires large space. Another manner is to use Continuously Operating Reference Stations (CORS) to achieve high-accuracy positioning based on data transmission between a machine and a CORS base station. However, for an individual user, CORS signals transmitted by the CORS base station are a paid service requiring additional fee, so the usage cost is high.

EP 1903351 A discloses a method for providing authorization to use corrections provided by a differential GPS base station, comprising: providing an access list to the differential GPS base station; broadcasting the access list from the differential GPS base station; and broadcasting a differential GPS correction signal from the differential GPS base station, wherein the differential GPS correction signal is applied by a mobile differential GPS receiver when the mobile differential GPS receiver receives the access list and the mobile differential GPS receiver determines that the access list authorizes the mobile differential GPS receiver to apply the differential GPS correction signal.

EP 1215508 A discloses a wireless position location system and method for determining the location of a mobile transceiver, such as a mobile station or wireless telephone. The system employs differential global positioning system (DGPS) information to accurately determine the location of the mobile transceiver. A cellular base transceiver station (BTS) may be used as a local reference station (LRS) which transmits the DGPS information to the mobile transceiver via general packet radio services (GPRS). The mobile transceiver is equipped to receive global positioning system (GPS) signals from GPS satellites. The mobile transceiver uses the DGPS information and the GPS signals to determine its location. The BTS may comprise an automatic position location (APL) system for periodically interrogating the mobile transceiver to respond and for automatically contacting assistance with the location of the mobile transceiver, if the mobile transceiver doesn't properly respond within a set time period.

### SUMMARY

The invention is set out in the appended set of claims.

### BRIEF DESCRIPTION OF THE DRAWINGS

FIG. 1 is a schematic diagram illustrating the structure of a differential global positioning system according to an embodiment;
FIG. 2 is a schematic diagram illustrating the structure of an intelligent device equipped with a differential global positioning system according to an embodiment; and
FIG. 3 is a schematic diagram illustrating the operation of the differential global positioning system of the embodiment shown in FIG. 2.

### DETAILED DESCRIPTION

In order to make the objectives, features, and advantages of the present invention more obvious and comprehensible, embodiments of the present invention are described in detail below with reference to the drawings.

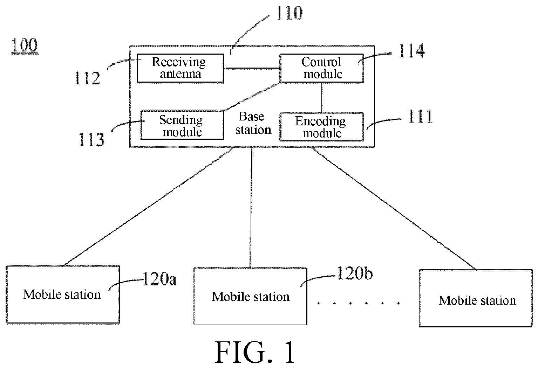

FIG. 1 is a schematic diagram illustrating the structure of a differential global positioning system according to an embodiment of the present invention. As shown in FIG. 1, a differential global positioning system 100 includes a base station 110. Certainly in this embodiment, the differential global positioning system further includes at least one intelligent device. The base station 110 is in communication connection with at least one intelligent device. Specifically, the intelligent device is a self-moving device 220. Certainly in other embodiments, the self-moving device may also be an intelligent robot or the like. The self-moving device 200 and the base station 110 may receive a satellite-based positioning signal from a satellite-based positioning system to achieve positioning. In this embodiment, a satellite-based positioning system is a GPS satellite 300, and the base station 110 and the self-moving device 200 receive the GPS positioning signal from the satellite-based positioning system to implement the GPS positioning. Certainly the satellite-based positioning system may also be a Galileo satellite navigation system, a Beidou satellite navigation system, or GLONASS.

The base station 110 transmits differential correction information to the self-moving device 200 to implement differential satellite-based positioning. Specifically, the base station 110 is configured to have a fixed accurate position when the base station is arranged at a fixed location, and the location is defined as first positioning data of the base station 110. In this embodiment, the first positioning data is represented by coordinate values, specifically (x1, y1). The base station 110 includes a first signal receiver (not shown), and the first signal receiver receives the satellite-based positioning signal sent by the satellite-based positioning system to obtain second positioning data of the base station 110. In this embodiment, the second positioning data is represented by coordinate values, specifically (x2, y2). Herein, the first signal receiver is a GPS signal receiver. Differential correction data e may be obtained according to a measurement error between the first positioning data (x1, y1) and the second positioning data (x2, y2). The base station 110 may be in communication connection with at least two self-moving devices 200 to transmit the corresponding differential correction data e to the at least two self-moving devices 200. It should be noted that generally the second positioning data obtained by the base station 110 according to the received GPS positioning signal sent by the satellite-based positioning system is a variable, which changes with the time when the GPS positioning signal is transmitted by the satellite-based positioning system, so that during the operation of the self-moving devices, the base station continuously transmits the differential correction data e to the self-moving devices 200, and the self-moving devices correct positioning data that is obtained by the satellite-based positioning system by receiving the GPS-based positioning signal in real time according to the obtained differential correction data.

Each self-moving device 200 includes a second signal receiver (not shown) and a third signal receiver (not shown) disposed separately, where the second signal receiver is configured to receive the GPS positioning signal from the satellite-based positioning system to obtain the positioning data of the corresponding self-moving device 200, and the third signal receiver is configured to receive the differential correction data sent by the base station 110. The self-moving device 200 further includes a shell (not labeled) and a mobile station 120 connected to the shell, and the base station 110 establishes a communication connection with the self-moving device 200 via the mobile station 120. The second signal transmitter and the third signal transmitter are integrated on the mobile station 120 of each self-moving device 200. In the present invention, the mobile station 120 is detachably connected with the self-moving device 200. The mobile station 120 is accommodated in the shell, and when the mobile station 120 is installed in the shell of the self-moving device 200, the positioning data of the self-moving device 200 at a current location is output according to the received GPS positioning signal. In the present invention the mobile station 120 can also be located outside the shell of the self-moving device 200, and a user can move the corresponding mobile station 120 to a specific location to obtain location data at the specific location.

The differential global positioning system 100 needs to establish only one base station 110, and communicates the at least two self-moving devices 200 by using the base station 110 to achieve accurate positioning of the self-moving devices 200. The base station 110 can establish communications with multiple self-moving devices 200, so the differential global positioning system 110 is expandable, and can connect to multiple self-moving devices 200 or have multiple self-moving devices 200 added thereto according to actual conditions. This is equivalent to setting up a regional differential global positioning network, thereby eliminating the need to establish the base station 120 for each self-moving devices 200 and greatly saving costs. The number of self-moving devices 200 can be increased or reduced as needed, and the coverage of the base station 120 can be adjusted to make the differential positioning more flexible and convenient.

In an embodiment, transmission of differential correction data information between the base station 110 and the self-moving device 200 does not require additional operation procedures. As long as the base station 110 exists and the self-moving device 200 is set within the coverage of the base station 110, the mobile station 120 on the self-moving device 200 receives the differential correction data in real time or within a preset time period, and corrects positioning data obtained by the corresponding self-moving device 200 by receiving the GPS positioning signal according to the corresponding differential correction data to ensure accurate positioning of the current location of the corresponding self-moving device in real time or within a preset time period. The following is a schematic illustration of the embodiment. The corresponding differential correction data obtained by the base station 110 may be understood as being transmitted to the outside in the form of a radio message or broadcast. Within the coverage of the base station 110, the self-moving device 200 receives the differential correction data sent by the base station 110 in real time or within a preset period of time without an intermediate program, and corrects the positioning data of the self-moving device 220 at the current location according to the received differential correction data.

In an embodiment, a communication connection between at least one of the at least two mobile devices 200 and the base station 110 requires a key process. Specifically, as shown in FIG.1, at least one self-moving device 200 includes an encoding module 111 for encoding the corresponding self-moving device 200 to obtain a code, and the base station 110 determines whether to transmit the differential correction data to the self-moving device 200 according to whether the code matches preset data information of the base station 110. Further, the base station 110 includes a sending module 113 and a control module 114. The sending module 113 is configured to send the differential correction data to the self-moving device 200, and the control module 113 is configured to store the code of the self-moving device, and control whether the sending module sends the differential correction data to the self-moving device 200 according to the code provided by the self-moving device 200. In this embodiment, the encoding module of the self-moving device 200 is disposed on the mobile station 120. Certainly in other embodiments, the encoding module and the mobile station 120 may also be disposed independently on the self-moving device 200. The following is an illustration of this embodiment. For example, there exist two self-moving devices 200, and both self-moving devices 200 have a mobile station. Specifically one self-moving device has a mobile station 120a, and the other self-moving device has a mobile station 120b. The base station 110 determines whether to establish communication with the mobile stations 120a and 120b according to whether the code of the mobile stations 120 is correct. When the code of the mobile station 120a received by the base station 110 is correct, the differential correction data is transmitted to the mobile station 120a; otherwise, the mobile station 120a may not obtain the corresponding differential correction data or obtain a wrong random code. Similarly when the code of the mobile station 120b received by the base station 110 is correct, the differential correction data is transmitted to the mobile station 120b; otherwise, the mobile station 120b may not obtain the corresponding differential correction data or obtain a wrong random code.

In an embodiment, the code of the mobile stations 120 within the coverage of the same base station 110 is uniquely identified so as to ensure the security and reliability of the established communication.

In an embodiment, the differential global positioning system 100 includes at least two transmission paths for transmitting corresponding differential correction data to corresponding self-moving devices 200. The number of the transmission paths is less than or equal to the number of the self-moving devices 200. When the base station 110 receives a request instruction sent by a corresponding self-moving device 200 for obtaining the differential correction data, the base station 110 instructs the self-moving device 200 to obtain the corresponding differential correction data through a corresponding transmission path. Further, when at least two self-moving devices 200 need to obtain differential correction data, and the format of the differential correction data to be obtained by the at least two self-moving devices 200 is the same, the base station 110 receives request instructions sent by the corresponding self-moving devices 200 for obtaining the differential correction data, and instructs the at least two self-moving devices 200 to obtain the corresponding differential correction data through any transmission path. When at least two self-moving devices 200 need to obtain differential correction data, and the formats of the differential correction data to be obtained by the at least two self-moving devices 200 are different, the base station 110 instructs the at least two self-moving devices 200 to obtain the corresponding differential correction data through different transmission paths. Further, the base station 110 also includes an identification module. When a self-moving device 200 sends a request instruction for obtaining differential correction data to the base station 110, the base station 110 determines whether the self-moving device satisfies a condition for receiving the differential correction data. Specifically, the condition may be whether the self-moving device 200 and the base station 110 have reached a differential data transmission license agreement. If the identification module determines that the self-moving device 200 has a differential data transmission permission from the base station 110, the base station 110 may successfully send the corresponding differential correction data to the self-moving device 200; if the identification module determines that the self-moving device 200 does not have the differential data transmission permission from the base station 110, the base station 110 cannot successfully send the corresponding differential correction data to the self-moving device 200, that is, the transmission path is automatically cut off. The following is a schematic illustration of this embodiment. The corresponding differential correction data obtained by the base station 110 may be understood as being transmitted to the outside in the form of a radio message or broadcast, and the at least two transmission paths may be understood as different frequency bands. When multiple self-moving devices 200 send requests for obtaining the corresponding differential correction data to the base station 110, the base station 110 receives the requests, and informs the corresponding self-moving devices 200 of the transmission paths at certain frequency bands through which the self-moving devices 200 can obtain the differential correction data.

In the differential global positioning system 100 in this design, the base station may define different receiving formats for different self-moving devices 200, and cut off the transmission paths of the self-moving devices 200 that do not have the permission in time. At the same time, other self-moving devices 200 with the permission can normally receive the differential correction data information. Therefore, this embodiment ensures that the self-moving devices of different models and different specifications can successfully receive the correct differential correction data. In another aspect, the base station 110 ensures the security of the data transmission between the base station 110 and the self-moving devices 200 by setting up a plurality of transmission paths; even if the transmission of a certain path is cut off, no interference is caused to other transmission paths, so that the base station 110 achieves more secure management.

In an embodiment, the self-moving device 200 is an intelligent lawn mower. Each intelligent lawn mower has a mobile station 120. Each intelligent lawn mower has an independent working area. For example, a base station 110 is established in a community, and each household has a self-moving device. Preferably, the self-moving devices are intelligent robots or intelligent power devices, such as intelligent weeders and intelligent lawn mowers. The self-moving device of each household in the community may establish communication with the base station 110, thereby achieving differential global positioning. In this way, the positioning of the self-moving devices in the area is effectively achieved, and the cost is greatly reduced.

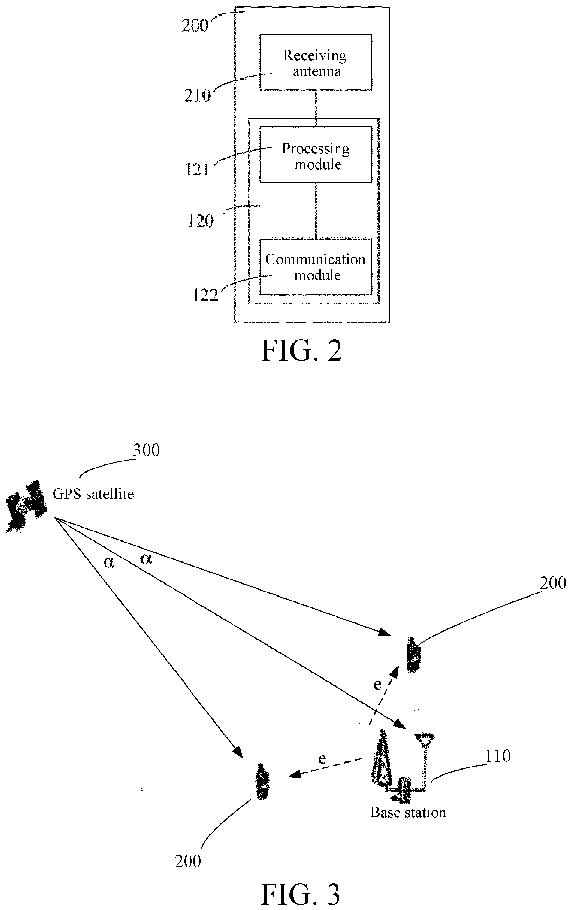

In one embodiment, as shown in FIG.2, the base station 110 further includes a receiving antenna 112 for receiving the GPS positioning signal, a sending module 113 for transmitting the differential correction data to the mobile stations 120, and a control module 114 for calculating the differential correction data, storing the code of the plurality of mobile stations 120, and controlling the sending module 113 to send the differential correction data to the different mobile stations 120 according to the code. Preferably, the coverage of the base station is within a radius of 50 kilometers to ensure accurate positioning of each intelligent device.

In an embodiment, the number of the intelligent devices 120 arranged in the coverage of the base station 110 is not more than 1000, so as to prevent communication congestion caused by an excessive number of intelligent devices within the coverage of the base station 110, thereby ensuring operational stability of the base station 110 and the positioning accuracy of each self-moving device 100.

FIG. 2 is a schematic diagram illustrating the structure of a self-moving device equipped with a differential global positioning system according to an embodiment of the present invention. A self-moving device 200 is provided with a mobile station 120, and the self-moving device 200 further includes a receiving antenna 210 for receiving a GPS positioning signal, where the GPS positioning signal is a global satellite-based positioning signal, such as GPS, Beidou or Galileo, and the like for obtaining global positioning information. In addition, the mobile station 120 further includes a communication module 122 and a processing module 121. The communication module 122 is configured to establish communication with the base station 110 to receive differential correction data, and the processing module 121 is connected to the receiving antenna 210 and the communication module 122 for processing the received GPS positioning signal and differential correction data for implementing high-accuracy positioning. In the differential global positioning system, one base station 110 can implement positioning of multiple self-moving devices, thereby greatly reducing the cost of positioning the self-moving devices.

In an embodiment, the self-moving device 200 further includes an inertial navigation system for outputting accurate positioning data for navigation when there are obstacles and satellite signals are not good. The inertial navigation system measures an acceleration and angular velocity of the self-moving device 200, integrates over time the acceleration, and transforms the acceleration to the navigation coordinate system to obtain the information of the velocity, yaw angle, location. Therefore, in mountain areas or forest areas with poor communication signals and unfavorable conditions, the inertial navigation system may be used for accurate positioning for the self-moving device 200 to make the differential global positioning system more applicable and more accurate.

It can be further understood that the self-moving device 200 may be an intelligent lawn mower, an intelligent lawn trimmer, and an intelligent weeder, but is not limited to the listed machines.

FIG. 3 is a schematic diagram illustrating the operation of the differential global positioning system. As shown in FIG. 3, the base station 110 and the self-moving devices 200 receive GPS positioning signals from the GPS satellite 300 to determine the locations of GPS positioning. The base station 110 calculates differential correction data e according to a measurement error between the accurate position thereof and the location of the GPS positioning, and transmits the differential correction data e to the self-moving devices 200. The self-moving device 200 calculate the accurate positioning locations thereof according to the received GPS satellite signals and the received differential correction data e. Normally, an angle α at the GPS satellite between the base station 110 and the self-moving device 200 is not more than 0.3 degree. Therefore, the self-moving device 200 processes according to the differential correction data e sent by the base station 110, and the error is small within an acceptable range. Further, a distance between the base station and the GPS satellite is equal to a distance between the self-moving device and the GPS satellite, and the corrected positioning data of the self-moving device is most accurate at this time.

Further, the base station 110 can be in communication with a plurality of self-moving devices 200 at the same time, so that when the plurality of self-moving devices 200 work at the same time, the accurate positioning of the intelligent devices can be implemented, thereby greatly reducing the cost of the accurate positioning.

Further, a positioning method of a differential global positioning system of the present invention is described below. The differential global positioning system including a base station 110, where the base station 110 is configured to set first positioning data thereof when the base station is located at a fixed location, and includes an analysis module. The base station 110 is in communication connection with at least one intelligent device, and each self-moving device includes a processing module. The positioning method of a differential global positioning system includes at least the following steps:
Step 1: data acquisition: obtaining second positioning data of the base station according to a GPS positioning signal sent by a satellite-based positioning system, and transmitting the first positioning data and the second positioning data to the analysis module of the base station; and
Step 2: data analysis: receiving and analyzing, by the analysis module of the base station, the first positioning data and the second positioning data in the step 1 to obtain differential correction data of the base station, and transmitting the obtained differential correction data to the processing module of the intelligent device.

Further, the positioning method includes step 3: data processing: receiving, by the processing module of the intelligent device, the differential correction data, and correcting, according to the differential correction data, positioning data of the corresponding intelligent device at a current location obtained by the corresponding intelligent device by receiving the satellite-based positioning signal.

Further, at least one intelligent device includes an encoding module, and the encoding module is configured to encode the corresponding intelligent device to obtain a code; and the step 2 further includes: when the analysis module of the base station obtains the differential correction data of the base station through analysis, determining, by the base station, whether to transmit the differential correction data to the corresponding intelligent device according to whether the code matches preset data information of the base station.

Further, the base station includes a sending module for sending the differential correction data to the intelligent device, and a control module for storing the code of the intelligent device, and controlling whether the sending module sends the differential correction data to the intelligent device according to the code provided by the intelligent device.

Further, the intelligent device includes a control module, and the positioning method further includes step 4: instruction issuing: feeding back the positioning data corrected by the intelligent device to the instruction module, and controlling, by the instruction module, a moving path of the intelligent device, and sending out an execution instruction.

Further, the intelligent device includes an execution module, and the positioning method further includes step 5: instruction execution: receiving, by the execution module, the instruction issued by the instruction module, and triggering the intelligent device to travel according to the obtained moving path.

Further, the differential global positioning system includes at least two transmission paths for transmitting the differential correction data to the corresponding intelligent devices, and between the step 2 and the step 3, the method further includes: sending, by the corresponding intelligent device, an instruction to the base station to request for the differential correction data, and receiving, by the base station, the instruction, and instructing the corresponding intelligent device according to the different self-moving device to obtain the correct differential correction data through a corresponding transmission path.

The embodiments above merely represent several embodiments of the present invention, and the description thereof is specific and detailed, but is not to be construed as a limitation on the protection scope of the present invention. It should be noted that any person skilled in the art may make some variations and modifications without departing from the present invention. Therefore, the protection scope of the present invention is defined in the attached claims.

## Claims

1. A differential global positioning system (100), comprising a base station (110) and at least one intelligent device (200), wherein the base station (110) is configured to set first positioning data thereof when the base station (110) is arranged at a fixed location, and the base station (110) comprises a first signal receiver; wherein the first signal receiver is configured to receive a satellite-based positioning signal sent by a satellite system (300) to obtain second positioning data of the base station (110), and the base station (110) is configured to obtain differential correction data according to a measurement error between the first positioning data and the second positioning data, and the base station (110) is configured to be in communication connection with at least two intelligent devices to transmit the corresponding differential correction data to the at least two intelligent devices; the differential global positioning system being **characterised in that**:
each intelligent device comprises a shell and a mobile station (120), wherein the base station (110) is in communication with the intelligent device via the mobile station (120), and wherein the mobile station (120) is detachably connectable within the shell of the intelligent device such that the mobile station (120) is configurable to obtain location data relating to a current location of the intelligent device when installed in the shell of the intelligent device, and to obtain location data relating to a specific location outside the shell of the intelligent device when the mobile station (120) is located away from the intelligent device.

2. The differential global positioning system according to claim 1, wherein at least one intelligent device (200) comprises an encoding module (111) for encoding the corresponding intelligent device to obtain a code; and the base station (110) is configured to determine whether to transmit the differential correction data to the corresponding intelligent device according to whether the code matches preset data information of the base station (110).

3. The differential global positioning system according to claim 2, wherein the base station (110) comprises a sending module (113) for sending the differential correction data to the intelligent device (200), and a control module (114) for storing the code of the intelligent device, and for controlling whether the sending module (113) sends the differential correction data to the intelligent device according to the code provided by the intelligent device.

4. The differential global positioning system according to claim 1, comprising at least two transmission paths for transmitting the corresponding differential correction data to the corresponding intelligent devices (200); wherein the base station (110) is configured to instruct the corresponding intelligent device to obtain the corresponding differential correction data through a corresponding transmission path when the base station (110) receives a request instruction sent by a corresponding intelligent device for obtaining the differential correction data.

5. The differential global positioning system according to claim 4, wherein the number of the transmission paths is less than or equal to the number of the intelligent devices (200).

6. The differential global positioning system according to claim 1, wherein each intelligent device (200) comprises a second signal receiver and a third signal receiver disposed separately; the second signal receiver is configured to receive a satellite-based positioning signal sent by a satellite-based positioning system (300) to obtain positioning data of the corresponding intelligent device at a current location, and the third signal receiver is configured to receive the differential correction data sent by the base station (110); and the second signal receiver and the third signal receiver are integrated on the mobile station (120) of each intelligent device.

7. The differential global positioning system according to claim 1, wherein the intelligent device (200) is a self-moving device or an intelligent robot.

8. The differential global positioning system according to claim 1, wherein the intelligent device (200) comprises an inertial navigation system.

9. A positioning method of a differential global positioning system (100), the differential global positioning system comprising a base station (110) and at least one intelligent device (200), wherein the base station (110) is configured to set first positioning data thereof when the base station (110) is located at a fixed location, and the base station (110) is in communication connection with at least two intelligent devices; the base station (110) further comprises an analysis module, and each intelligent device comprises a processing module (121), wherein the positioning method comprises:
data acquisition comprising: obtaining second positioning data of the base station (110) according to a satellite-based positioning signal sent by a satellite-based positioning system (300), and transmitting the first positioning data and the second positioning data to the analysis module of the base station (110); and
data analysis comprising: receiving and analyzing, by the analysis module of the base station (110), the first positioning data and the second positioning data in the data acquisition to obtain differential correction data of the base station (110), and transmitting the obtained differential correction data to the processing module (121) of the at least two intelligent devices;
the positioning method being **characterised in that** each intelligent device comprises a shell and a mobile station (120), the base station (110) communicating with the intelligent device via the mobile station (120), and wherein the mobile station (120) is detachably connectable within the shell of the intelligent device such that the mobile station (120) obtains location data relating to a current location of the intelligent device when installed in the shell of the intelligent device, and obtains specific location data relating to a location outside the shell of the intelligent device when the mobile station (120) is located away from the intelligent device.

10. The positioning method of a differential global positioning system according to claim 9, further comprising data processing, wherein the data processing comprises: receiving, by the processing module (121) of the intelligent device (200), the differential correction data, and correcting, according to the differential correction data, positioning data of the corresponding intelligent device at a current location obtained by the corresponding intelligent device by receiving the satellite-based positioning signal.

11. The positioning method of a differential global positioning system according to claim 10, wherein the intelligent device (200) further comprises an instruction module, and the positioning method further comprises instruction issuing comprising: feeding back the positioning data corrected by the intelligent device to the instruction module, and controlling, by the instruction module, a moving path of the intelligent device, and sending out an execution instruction.

12. The positioning method of a differential global positioning system according to claim 11, wherein the intelligent device (200) further comprises an execution module, and the positioning method further comprises instruction execution comprising:
receiving, by the execution module, the instruction issued by the instruction module, and triggering the intelligent device to travel according to the obtained moving path.

## Patentansprüche

1. Differenzielles globales Positionierungssystem (100), das eine Basisstation (110) und wenigstens eine intelligente Vorrichtung (200) umfasst, wobei die Basisstation (110) konfiguriert ist, um erste Positionierungsdaten davon einzustellen, wenn die Basisstation (110) an einem festen Standort angeordnet ist, und die Basisstation (110) einen ersten Signalempfänger umfasst; wobei der erste Signalempfänger konfiguriert ist, um ein satellitenbasiertes Positionierungssignal zu empfangen, das durch ein Satellitensystem (300) gesendet wird, um zweite Positionierungsdaten der Basisstation (110) zu erhalten, und die Basisstation (110) konfiguriert ist, um differenzielle Korrekturdaten gemäß einem Messfehler zwischen den ersten Positionierungsdaten und den zweiten Positionierungsdaten zu erhalten, und die Basisstation (110) konfiguriert ist, um mit wenigstens zwei intelligenten Vorrichtungen in Kommunikationsverbindung zu stehen, um die entsprechenden differenziellen Korrekturdaten an die wenigstens zwei intelligenten Vorrichtungen zu übertragen;
wobei das differenzielle globale Positionierungssystem **dadurch gekennzeichnet ist, dass**:
jede intelligente Vorrichtung eine Hülle und eine Mobilstation (120) umfasst, wobei die Basisstation (110) über die Mobilstation (120) mit der intelligenten Vorrichtung in Kommunikation steht und wobei die Mobilstation (120) innerhalb der Hülle der intelligenten Vorrichtung derart abnehmbar verbindbar ist, dass die Mobilstation (120) konfigurierbar ist, um Standortdaten zu erhalten, die sich auf einen aktuellen Standort der intelligenten Vorrichtung beziehen, wenn sie in der Hülle der intelligenten Vorrichtung installiert ist, und um Standortdaten zu erhalten, die sich auf einen spezifischen Standort außerhalb der Hülle der intelligenten Vorrichtung beziehen, wenn sich die Mobilstation (120) von der intelligenten Vorrichtung entfernt befindet.

2. Differenzielles globales Positionierungssystem nach Anspruch 1, wobei wenigstens eine intelligente Vorrichtung (200) ein Codierungsmodul (111) zum Codieren der entsprechenden intelligenten Vorrichtung zum Erhalten eines Codes umfasst; und die Basisstation (110) konfiguriert ist, zu bestimmen, ob die differenziellen Korrekturdaten an die entsprechende intelligente Vorrichtung übertragen werden sollen, je nachdem, ob der Code zu voreingestellten Dateninformationen der Basisstation (110) passt.

3. Differenzielles globales Positionierungssystem nach Anspruch 2, wobei die Basisstation (110) ein Sendemodul (113) zum Senden der differenziellen Korrekturdaten an die intelligente Vorrichtung (200) und ein Steuermodul (114) zum Speichern des Codes der intelligenten Vorrichtung und zum Steuern, ob das Sendemodul (113) die differenziellen Korrekturdaten gemäß dem durch die intelligente Vorrichtung bereitgestellten Code an die intelligente Vorrichtung sendet, umfasst.

4. Differenzielles globales Positionierungssystem nach Anspruch 1, das wenigstens zwei Übertragungswege zum Übertragen der entsprechenden differenziellen Korrekturdaten an die entsprechenden intelligenten Vorrichtungen (200) umfasst; wobei die Basisstation (110) konfiguriert ist, um die entsprechende intelligente Vorrichtung anzuweisen, die entsprechenden differenziellen Korrekturdaten durch einen entsprechenden Übertragungsweg zu erhalten, wenn die Basisstation (110) eine Anforderungsanweisung empfängt, die durch eine entsprechende intelligente Vorrichtung zum Erhalten der differenziellen Korrekturdaten gesendet wird.

5. Differenzielles globales Positionierungssystem nach Anspruch 4, wobei die Anzahl der Übertragungswege höchstens die Anzahl der intelligenten Vorrichtungen (200) ist.

6. Differenzielles globales Positionierungssystem nach Anspruch 1, wobei jede intelligente Vorrichtung (200) einen zweiten Signalempfänger und einen dritten Signalempfänger umfasst, die getrennt angeordnet sind; wobei der zweite Signalempfänger konfiguriert ist, um ein satellitenbasiertes Positionierungssignal zu empfangen, das durch ein satellitenbasiertes Positionierungssystem (300) gesendet wird, um Positionierungsdaten der entsprechenden intelligenten Vorrichtung an einem aktuellen Standort zu erhalten, und der dritte Signalempfänger konfiguriert ist, um die differenziellen Korrekturdaten zu empfange, die durch die Basisstation (110) gesendet werden; und der zweite Signalempfänger und der dritte Signalempfänger auf der Mobilstation (120) jeder intelligenten Vorrichtung integriert sind.

7. Differenzielles globales Positionierungssystem nach Anspruch 1, wobei die intelligente Vorrichtung (200) eine selbstbewegende Vorrichtung oder ein intelligenter Roboter ist.

8. Differenzielles globales Positionierungssystem nach Anspruch 1, wobei die intelligente Vorrichtung (200) ein Trägheitsnavigationssystem umfasst.

9. Positionierungsverfahren eines differenziellen globalen Positionierungssystems (100), wobei das differenzielle globale Positionierungssystem eine Basisstation (110) und wenigstens eine intelligente Vorrichtung (200) umfasst, wobei die Basisstation (110) konfiguriert ist, um erste Positionierungsdaten davon einzustellen, wenn sich die Basisstation (110) an einem festen Standort befindet, und die Basisstation (110) mit wenigstens zwei intelligenten Vorrichtungen in Kommunikationsverbindung steht; wobei die Basisstation (110) ferner ein Analysemodul umfasst und jede intelligente Vorrichtung ein Verarbeitungsmodul (121) umfasst, wobei das Positionierungsverfahren Folgendes umfasst:
eine Datenerfassung, die Folgendes umfasst: Erhalten zweiter Positionierungsdaten der Basisstation (110) gemäß einem satellitenbasierten Positionierungssignal, das durch ein satellitenbasiertes Positionierungssystem (300) gesendet wird, und Übertragen der ersten Positionierungsdaten und der zweiten Positionierungsdaten an das Analysemodul der Basisstation (110); und
eine Datenanalyse, die Folgendes umfasst: Empfangen und Analysieren, durch das Analysemodul der Basisstation (110), der ersten Positionierungsdaten und der zweiten Positionierungsdaten in der Datenerfassung, um differenzielle Korrekturdaten der Basisstation (110) zu erhalten, und Übertragen der erhaltenen differenziellen Korrekturdaten an das Verarbeitungsmodul (121) der wenigstens zwei intelligenten Vorrichtungen;
wobei das Positionierungsverfahren **dadurch gekennzeichnet ist, dass** jede intelligente Vorrichtung eine Hülle und eine Mobilstation (120) umfasst, die Basisstation (110) über die Mobilstation (120) mit der intelligenten Vorrichtung kommuniziert und wobei die Mobilstation (120) innerhalb der Hülle der intelligenten Vorrichtung derart abnehmbar verbindbar ist, dass die Mobilstation (120) Standortdaten erhält, die sich auf einen aktuellen Standort der intelligenten Vorrichtung beziehen, wenn sie in der Hülle der intelligenten Vorrichtung installiert ist, und spezifische Standortdaten erhält, die sich auf einen Standort außerhalb der Hülle der intelligenten Vorrichtung beziehen, wenn sich die Mobilstation (120) von der intelligenten Vorrichtung entfernt befindet.

10. Positionierungsverfahren eines differenziellen globalen Positionierungssystems nach Anspruch 9, das ferner eine Datenverarbeitung umfasst, wobei die Datenverarbeitung Folgendes umfasst: Empfangen, durch das Verarbeitungsmodul (121) der intelligenten Vorrichtung (200), der differenziellen Korrekturdaten und Korrigieren, gemäß den differenziellen Korrekturdaten, der Positionierungsdaten der entsprechenden intelligenten Vorrichtung an einem aktuellen Standort, die durch die entsprechende intelligenten Vorrichtung durch Empfangen des satellitenbasierten Positionierungssignals erhalten werden.

11. Positionierungsverfahren eines differenziellen globalen Positionierungssystems nach Anspruch 10, wobei die intelligente Vorrichtung (200) ferner ein Anweisungsmodul umfasst und das Positionierungsverfahren ferner eine Anweisungsausgabe umfasst, die Folgendes umfasst: Rückmelden der durch die intelligente Vorrichtung korrigierten Positionierungsdaten an das Anweisungsmodul und Steuern, durch das Anweisungsmodul, eines Bewegungswegs der intelligenten Vorrichtung und Aussenden einer Ausführungsanweisung.

12. Positionierungsverfahren eines differenziellen globalen Positionierungssystems nach Anspruch 11, wobei die intelligente Vorrichtung (200) ferner ein Ausführungsmodul umfasst und das Positionierungsverfahren ferner eine Anweisungsausführung umfasst, die Folgendes umfasst: Empfangen, durch das Ausführungsmodul, der Anweisung, die durch das Anweisungsmodul ausgegeben wird, und die intelligente Vorrichtung veranlassen, sich gemäß dem erhaltenen Bewegungsweg fortzubewegen.

## Revendications

1. Système de positionnement global différentiel (100), comprenant une station de base (110) et au moins un dispositif intelligent (200), dans lequel la station de base (110) est conçue pour établir des premières données de positionnement de celle-ci lorsque la station de base (110) est disposée à un emplacement fixe, et la station de base (110) comprend un premier récepteur de signal ; dans lequel le premier récepteur de signal est conçu pour recevoir un signal de positionnement satellitaire envoyé par un système satellitaire (300) pour obtenir des secondes données de positionnement de la station de base (110), et la station de base (110) est conçu pour obtenir des données de correction différentielle en fonction d'une erreur de mesure entre les premières données de positionnement et les secondes données de positionnement, et la station de base (110) est conçue pour être en connexion de communication avec au moins deux dispositifs intelligents pour transmettre les données de correction différentielle correspondantes aux au moins deux dispositifs intelligents ;
le système de positionnement global différentiel étant **caractérisé en ce que** :
chaque dispositif intelligent comprend une coque et une station mobile (120), dans lequel la station de base (110) est en communication avec le dispositif intelligent par l'intermédiaire de la station mobile (120), et dans lequel la station mobile (120) peut être connectée de manière détachable à l'intérieur de la coque du dispositif intelligent de sorte que la station mobile (120) peut être conçue pour obtenir des données de localisation relatives à un emplacement actuel du dispositif intelligent lorsqu'elle est installée dans la coque du dispositif intelligent, et pour obtenir des données de localisation relatives à un emplacement spécifique à l'extérieur de la coque du dispositif intelligent lorsque la station mobile (120) est située loin du dispositif intelligent.

2. Système de positionnement global différentiel selon la revendication 1, dans lequel au moins un dispositif intelligent (200) comprend un module de codage (111) pour coder le dispositif intelligent correspondant afin d'obtenir un code ; et la station de base (110) est conçue pour déterminer s'il faut transmettre les données de correction différentielle au dispositif intelligent correspondant selon que le code correspond ou non à des informations de données prédéfinies de la station de base (110).

3. Système de positionnement global différentiel selon la revendication 2, dans lequel la station de base (110) comprend un module d'envoi (113) pour envoyer les données de correction différentielle au dispositif intelligent (200), et un module de commande (114) pour stocker le code du dispositif intelligent, et pour commander si le module d'envoi (113) envoie les données de correction différentielle au dispositif intelligent selon le code fourni par le dispositif intelligent.

4. Système de positionnement global différentiel selon la revendication 1, comprenant au moins deux voies de transmission pour transmettre les données de correction différentielle correspondantes aux dispositifs intelligents correspondants (200) ; dans lequel la station de base (110) est conçue pour ordonner au dispositif intelligent correspondant d'obtenir les données de correction différentielle correspondantes par l'intermédiaire d'une voie de transmission correspondante lorsque la station de base (110) reçoit une instruction de demande envoyée par un dispositif intelligent correspondant pour obtenir les données de correction différentielle.

5. Système de positionnement global différentiel selon la revendication 4, dans lequel le nombre de voies de transmission est inférieur ou égal au nombre de dispositifs intelligents (200).

6. Système de positionnement global différentiel selon la revendication 1, dans lequel chaque dispositif intelligent (200) comprend un deuxième récepteur de signal et un troisième récepteur de signal disposés séparément ; le deuxième récepteur de signal est conçu pour recevoir un signal de positionnement satellitaire envoyé par un système de positionnement satellitaire (300) pour obtenir des données de positionnement du dispositif intelligent correspondant à un emplacement actuel, et le troisième récepteur de signal est conçu pour recevoir les données de correction différentielle envoyées par la station de base (110) ; et le deuxième récepteur de signal et le troisième récepteur de signal sont intégrés sur la station mobile (120) de chaque dispositif intelligent.

7. Système de positionnement global différentiel selon la revendication 1, dans lequel le dispositif intelligent (200) est un dispositif auto-mobile ou un robot intelligent.

8. Système de positionnement global différentiel selon la revendication 1, dans lequel le dispositif intelligent (200) comprend un système de navigation inertielle.

9. Procédé de positionnement d'un système de positionnement global différentiel (100), le système de positionnement global différentiel comprenant une station de base (110) et au moins un dispositif intelligent (200), dans lequel la station de base (110) est conçue pour étabir des premières données de positionnement de celle-ci lorsque la station de base (110) est située à un emplacement fixe, et la station de base (110) est en connexion de communication avec au moins deux dispositifs intelligents; la station de base (110) comprend en outre un module d'analyse, et chaque dispositif intelligent comprend un module de traitement (121), dans lequel le procédé de positionnement comprend :
l'acquisition de données comprenant : l'obtention de secondes données de positionnement de la station de base (110) selon un signal de positionnement satellitaire envoyé par un système de positionnement satellitaire (300), et la transmission des premières données de positionnement et des secondes données de positionnement au module d'analyse de la station de base (110) ; et
l'analyse de données comprenant : la réception et l'analyse, par le module d'analyse de la station de base (110), des premières données de positionnement et des secondes données de positionnement dans l'acquisition de données pour obtenir des données de correction différentielle de la station de base (110), et la transmission des données de correction différentielle obtenues au module de traitement (121) des au moins deux dispositifs intelligents ;
le procédé de positionnement étant **caractérisé en ce que** chaque dispositif intelligent comprend une coque et une station mobile (120), la station de base (110) communiquant avec le dispositif intelligent par l'intermédiaire de la station mobile (120), et dans lequel la station mobile (120) peut être connectée de manière détachable à l'intérieur de la coque du dispositif intelligent de sorte que la station mobile (120) obtient des données de localisation relatives à un emplacement actuel du dispositif intelligent lorsqu'elle est installée dans la coque du dispositif intelligent, et obtient des données de localisation spécifiques relatives à un emplacement à l'extérieur de la coque du dispositif intelligent lorsque la station mobile (120) est située loin du dispositif intelligent.

10. Procédé de positionnement d'un système de positionnement global différentiel selon la revendication 9, comprenant en outre un traitement de données, dans lequel le traitement de données comprend : la réception, par le module de traitement (121) du dispositif intelligent (200), des données de correction différentielle, et la correction, selon les données de correction différentielle, des données de positionnement du dispositif intelligent correspondant à un emplacement actuel obtenues par le dispositif intelligent correspondant en recevant le signal de positionnement satellitaire.

11. Procédé de positionnement d'un système de positionnement global différentiel selon la revendication 10, dans lequel le dispositif intelligent (200) comprend en outre un module d'instruction, et le procédé de positionnement comprend en outre l'émission d'instructions comprenant : le renvoi des données de positionnement corrigées par le dispositif intelligent au module d'instruction, et la commande, par le module d'instruction, d'une trajectoire de déplacement du dispositif intelligent, et l'envoi d'une instruction d'exécution.

12. Procédé de positionnement d'un système de positionnement global différentiel selon la revendication 11, dans lequel le dispositif intelligent (200) comprend en outre un module d'exécution, et le procédé de positionnement comprend en outre l'exécution d'instruction comprenant : la réception, par le module d'exécution, de l'instruction émise par le module d'instruction, et le déclenchement du déplacement du dispositif intelligent en fonction de la trajectoire de déplacement obtenue.
